# EUROPEAN PATENT APPLICATION

(11) **EP 1 512 456 A1**
(43) Date of publication of application: **09.03.2005**
(21) Application number: 03723361.6
(22) Date of filing: 14.05.2003
(51) Int. Cl.: B01D 69/06, B01D 63/08

(54) **MEMBRANE SEPARATION DEVICE AND MEMBRANE SEPARATION METHOD**

(30) Priority: 16.05.2002 JP 2002141248; 31.10.2002 JP 2002317933; 14.04.2003 JP 2003109447
(71) Applicant: KOBELCO ECO-SOLUTIONS CO., LTD., Kobe-shi, Hyogo 651-0072 (JP)
(72) Inventor: TANIDA, Katsuyoshi, Kobe-shi, Hyogo 655-0016 (JP); NONAKA, Shinichi, Kobe-shi, Hyogo 651-2273 (JP); SHIMADA, Mitsushige, Kobe-shi, Hyogo 651-2109 (JP); MATSUDA, Tsutomu, Kobe-shi, Hyogo 652-0035 (JP); HIRAI, Kiyoshi, Kakogawa-shi, Hyogo 675-0131 (JP); UEMURA, Masahiro, Kakogawa-shi, Hyogo 675-0016 (JP); TAKATA, Kazutaka, Kobe-shi, Hyogo 655-0039 (JP); ITO, Yutaka, Amagasaki-shi, Hyogo 661-0953 (JP); HASEGAWA, Susumu, Kobe-shi, Hyogo 651-2242 (JP)
(74) Representative: Smyth, Gyles Darren
(86) International application number: PCT/JP2003/005974
(87) International publication number: WO 2003/097220

(57) **Abstract**

It is an object of the present invention to provide a membrane separation apparatus and a membrane separation process that are unlikely to cause membrane fouling and plugging, capable of achieving membrane separation even with relatively low flow rate of water, have an excellent membrane packing density, and are unlikely to cause deposition of foreign components in the apparatus. In order to achieve the above object, according to the present invention, vessel-type inner casings are disposed in a pressure vessel along the longitudinal axis thereof, in which the pressure vessel has a water inlet at a first end and a concentrate outlet at a second end. A flow-regulating plate is disposed on the side of the water inlet of the pressure vessel. Stacks of membrane separation units are respectively disposed in the inner casings, and spacers are disposed between the adjacent membrane separation elements. The spacers also serve as sealing members. Each stack of the membrane separation units and the spacers together define a through-hole extending from a first side to a second side, of the stack of the membrane separation elements. The inner casings have permeate discharge passages along the longitudinal axis thereof. The permeate discharge passages are communicated with the through-hole of each stack of the membrane separation elements. Water that has been fed into the pressure vessel via the flow-regulating plate permeates through the membrane separation elements and is discharged to the outside via the through-holes and the permeate discharge passages.

## Description

### FIELD OF THE INVENTION

The present invention relates to a membrane separation apparatus of a flat sheet membrane type and a membrane separation process that are capable of being utilized in solid-liquid separation, deionization, soluble organic component removal, colloidal silica wastewater treatment, latex wastewater treatment, various waste liquids treatment, tap water filtration, activated sludge treatment, food wastewater treatment, domestic wastewater treatment (water reclamation), ship wastewater treatment, raw sewage treatment, COD reduction, BOD reduction, filter back wash wastewater treatment, printing ink wastewater treatment and the like.

### BACKGROUND OF THE INVENTION

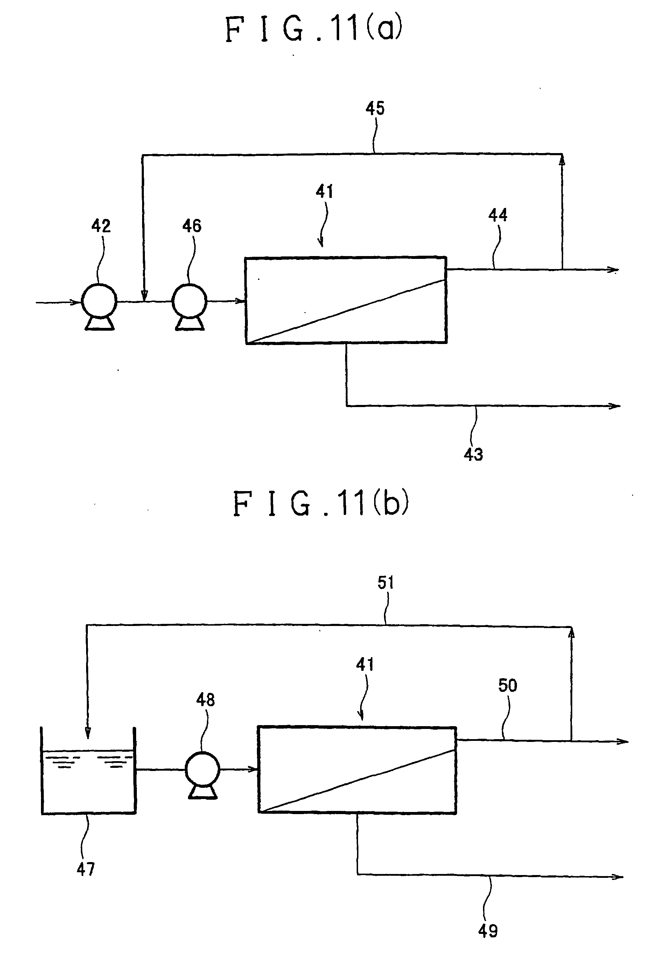

A membrane separation apparatus is used for separation of liquid (water to be treated), which contains various matters dissolved or mixed in water into purified water (permeate) and highly concentrated water. Of various types of the membrane separation apparatus, a cross-flow membrane separation is broadly carried out. The cross-flow membrane separation is carried out, as illustrated in FIG. 11(a), such as by sending pressurized water by a feeding pump 42 to a membrane module 41 that has a function to separate water into permeate and concentrate, retrieving the permeate from the membrane module 41 via a conduit 43, retrieving the concentrate from the membrane module 41 via a conduit 44, returning the concentrate into the membrane module 41 via a conduit 45 and a circulating pump 46, and circulating the concentrate many times through the conduits 44, 45, thereby increasing the concentration level, and as illustrated in FIG. 11(b), by feeding water stored in a tank 47 into the membrane module 41 by a feeding pump 48, retrieving permeate from the membrane module 41 via a conduit 49, returning concentrate into the tank 47 via conduits 50, 51, feeding water of the tank 47 into the membrane module 41 by the feeding pump 48, and circulating the concentrate many times through the conduits 50, 51, thereby increasing the concentration level. In the meantime, the membrane modules which are classified according to the currently used module type are as follows:
(1) HOLLOW FIBER MODULE It is made up of a bundle of hollow fibers each having an outer diameter of about 500-1500 µm. Although it has a remarkably large membrane area per unit volume, it has shortcomings in that plugging is likely to occur in a hollow fiber which constitutes a narrow flow passage, frequent washing is required, and water to be treated is limited to relatively clean raw water and therefore it is necessary to strictly carry out a pretreatment step.
(2) SPIRAL WOUND MODULE It is made up of a membrane and a spacer that are wound around a centrally located water-collecting pipe in spiral fashion. In many cases, several water-collecting pipes are placed in a pressure vessel and successively connected each other in tandem. This results in a large membrane area in compact size, but has a shortcoming in that plugging is likely to occur in a flow passage of the membrane, in the same manner as the hollow fiber module.
(3) TUBULAR MODULE It is made up of a bundle of a few dozen support tubes each having an inner diameter of several millimeters to several tens of millimeters and a length of up to about 3 meters with a membrane mounted on an inner surface or outer surface of each tube. This is advantageous in that plugging is unlikely to occur in flow passages of the tubes, but has a shortcoming in that the value of the membrane packing density is smaller than those of the both modules and the membrane packing efficiency is inferior.

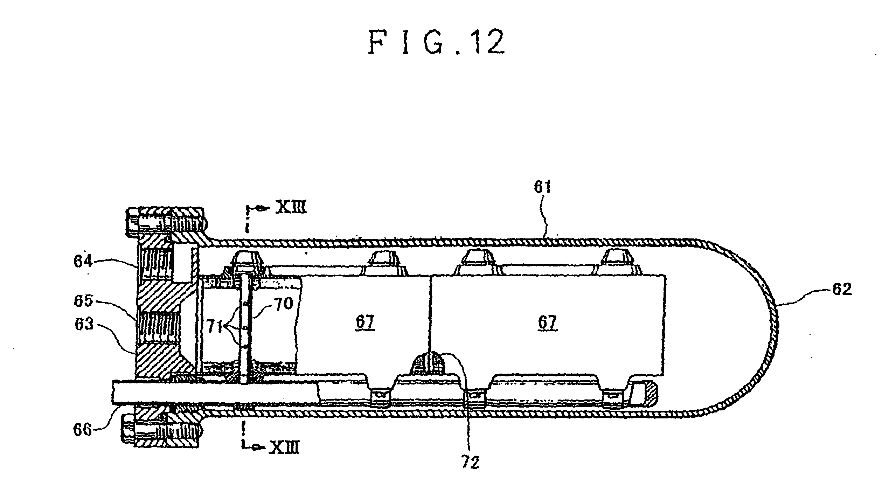

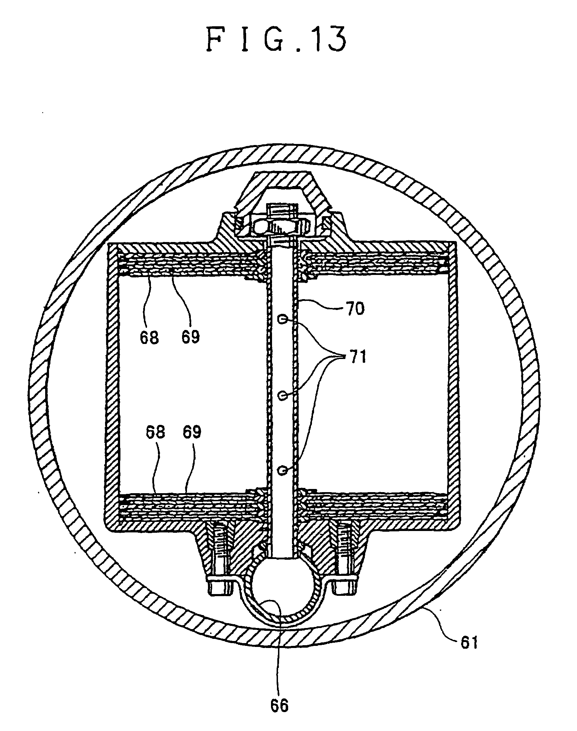

Japanese Examined Patent Application Publication No. Hei-03-18490 discloses a filtration and separation apparatus, as illustrated in FIGS. 12 and 13. In FIGS. 12 and 13, a tubular outer casing 61 has one end closed with a dome-like bottom 62, and another end sealed with a lid 63. The lid 63 has openings respectively defining a raw-water inlet connection part 64, a salt-water outlet connection part 65 and an outlet for a permeate discharge pipe 66. Inner casings 67, 67 are disposed in the outer casing 61 along the longitudinal axis thereof, each inner casing 67 being filled with a stack of diaphragm cushions 68 with spacers 69 disposed between the adjacent diaphragm cushions 68, 68. A tubular bolt 70 extends through the stack of the diaphragm cushions 68 and has a plurality of radially extending holes 71. According to the filtration apparatus disclosed in the above cited patent publication, raw water flown in the outer casing 61 through the inlet connection part 64 permeates through the diaphragm cushions 68 so that a part (permeate), which has passed through the diaphragm cushions, flows into the tubular bolt 70 through the radially extending holes 71 and is discharged via the permeate discharge pipe 66, while a non-permeate part (retentate) is discharged through the salt-water outlet connection part 65.

The filtration apparatus of the cited patent publication, which necessitates an elongated fluid passage for water to be treated, has shortcomings in that a large pressure loss is caused, and foreign components are likely to be deposited in a space 72 between the inner casings 67, 67 disposed along the longitudinal axis.

The present invention has been conceived in consideration of those problems associated with the prior arts. It is an object of the present invention to provide a membrane separation apparatus and a membrane separation process that cause less fouling and plugging and therefore are capable of achieving membrane separation even with relatively small flow rate of water to be treated, have an excellent membrane packing density, and are unlikely to cause deposition of foreign components in the apparatus.

### SUMMARY OF THE INVENTION

In order to achieve the above object, according to the present invention, there is provided a membrane separation apparatus, which includes a pressure vessel with a flow-regulating plate disposed on the side of the water inlet, inner casings disposed in this pressure vessel, and stacks of membrane separation elements respectively disposed in the inner casings. The membrane separation elements have a through-hole extending therethrough, while the inner casings have permeate discharge passages extending along the longitudinal axis thereof so as to be communicated with the through-hole so that water that has been fed into the pressure vessel via the flow-regulating plate permeates through the membrane separation elements and is discharged to the outside via the through-hole and the permeate discharge passages defined in the inner casings.

According to the present invention, there is also provided a membrane separation apparatus, which includes a pressure vessel having a water inlet and a concentrate outlet, an inner casing disposed in the pressure vessel and a membrane separation element group. The membrane separation element group is made up of a stack of membrane separation elements and spacers disposed between the membrane separation elements. The membrane separation element group has a through-hole extending through the membrane separation elements and the spacers. The through-hole defined in the membrane separation element group is communicated with permeate discharge passages defined in the inner casing so that water that has been fed into the pressure vessel permeates through the membrane separation elements and is discharged to the outside via the through-hole and the permeate discharge passages.

It is preferable to employ in the membrane separation apparatus of the present invention an arrangement in which plural inner casings are disposed in the pressure vessel and membrane separation element groups disposed in the adjacent inner casings are located close to each other.

With the above preferable arrangement, the membrane separation element groups are located close to each other so that no space is formed therebetween unlike the prior art. Accordingly, this arrangement can solve the problem associated with the prior art, namely "deposition of foreign components" in the space.

It is preferable to employ in the membrane separation apparatus of the present invention an arrangement in which each of the membrane separation elements has a five-layer structure of a permeable membrane, a space retaining member, a support plate, a space retaining member and a permeate membrane laminated together in this order, and the support plate has at least one cut that has a first end communicated with the through-hole.

With the above preferable arrangement in which the cut is defined in the support plate to be communicated with (contact) the through-hole, it is possible to effectively transmit liquid that has permeated through the membrane separation element, to the permeate discharge passages via the cut and the through-hole. That is, the cut as defined can reduce the pressure loss of permeate and secure smooth flow of permeate into the through-hole.

It is also preferable to employ in the membrane separation apparatus of the present invention an arrangement in which the cut has a second end located outside of a project area of the spacers in the support plate.

With the above preferable arrangement in which the second end of the cut is located outside of the project area of the spacers in the support plate, even in case where the membrane separation elements and the spacers are tightly stacked together, it is possible to secure a flow-in passage for liquid that has permeated through the membrane separation elements, thus achieving proper transmission of permeate (transmission via the permeate discharge passages) via the cut or the like.

It is also preferable to employ in the membrane separation apparatus of the present invention an arrangement where plural membrane separation element groups are disposed in the inner casing.

With the above preferable arrangement in which the plural membrane separation element groups are disposed in the inner casing, it is possible to treat water in large volume with respect to an installation area than ever before.

It is also preferable to employ in the membrane separation apparatus of the present invention an arrangement in which the adjacent membrane separation element groups are disposed at a certain angle relative to each other. They are more preferably disposed substantially orthogonal to each other.

With the above preferable arrangement in which the adjacent membrane separation element groups are disposed at a certain angle (e.g., orthogonal) relative to each other, it is easy to cause turbulent flow of water to be treated. As a result, deposition of suspended solid on membrane surfaces (the surfaces of the permeable membranes) of the membrane separation elements is suppressed. More preferably, the membrane separation element groups are disposed substantially orthogonal to each other, since it produces a maximum effect in causing turbulent flow of water.

The "certain angle" is not limited to a specific angle, but an angle greater than 0., for example 10.90. is preferable in light of the balance relative to the pressure loss or the like.

It is also preferable to employ in the membrane separation apparatus of the present invention an arrangement in which the flow-regulating plate disposed on the side of the water inlet of the pressure vessel is disposed substantially orthogonal to the adjacent membrane separation element group.

With the above preferable arrangement, turbulent flow of water is likely to occur between the flow-regulating plate and the membrane separation element group. Thus, deposition of suspended solid on the membrane surfaces (the surfaces of the permeable membranes) of the membrane separation elements is suppressed in the same manner as above.

The inner casing of the membrane separation apparatus of the present invention may be replaced with water collecting members that are capable of holding the membrane separation elements therebetween and have permeate discharge passages communicated with the through-hole defined in the membrane separation element group.

Specifically, the membrane separation apparatus of the present invention may include a pressure vessel having a water inlet and a concentrate outlet, water collecting members disposed in the pressure vessel, and a membrane separation element group held between the water collecting members. The membrane separation element group is made up of a stack of membrane separation elements and spacers disposed between the membrane separation elements. The membrane separation element group defines a through-hole that extends through the membrane separation elements and the spacers. The through-hole defined in the membrane separation element group is communicated with permeate discharge passages respectively defined in the water collecting members, so that water that has been fed into the pressure vessel permeates through the membrane separation elements and is discharged to the outside via the through-hole and the permeate discharge passages.

The water collecting members of the membrane separation apparatus each are preferably made of a plate-like member.

According to the membrane separation process of the present invention, in which a pressure vessel has a water inlet and a concentrate outlet; an inner casing is disposed in the pressure vessel; a membrane separation element group is disposed in the inner casing; the membrane separation element group is made up of a stack of membrane separation elements and spacers disposed between the membrane separation elements; the membrane separation element group defines a through-hole that extends through the membrane separation elements and the spacers; and the through-hole defined in the membrane separation element group is communicated with permeate discharge passages defined in the inner casing, the process includes drawing water into the pressure vessel, making said water permeate through the membrane separation elements and discharging permeate to the outside via the through-hole and the permeate discharge passages.

According to the membrane separation process, in which a pressure vessel has a water inlet and a concentrate outlet; water collecting members are disposed in the pressure vessel; a membrane separation element group is held between the water collecting members; the membrane separation element group is made up of a stack of membrane separation elements and spacers disposed between the membrane separation elements; the membrane separation element group defines a through-hole that extends through the membrane separation elements and the spacers; and the through-hole defined in the membrane separation element group is communicated with permeate discharge passages respectively defined in the water collecting members, the process includes drawing water into the pressure vessel, making said water permeate through the membrane separation elements and discharging permeate to the outside via the through-hole and the permeate discharge passages.

### BRIEF DESCRIPTION OF THE DRAWINGS

FIG. 1 is a perspective view of a pressure vessel of the present invention.
FIG. 2 is a perspective view of an inner casing separated into an upper part and a lower part.
FIGS. 3 are schematic views of the pressure vessel, in which FIG. 3(a) is a cross sectional view of one example of the pressure vessel according to the present invention; FIG. 3(b) is a front view of an inlet side thereof, FIG. 3(c) is a cross sectional view illustrating a part of a flow-regulating plate as viewed in the direction of arrows C-C in FIG. 3(d); and FIG. 3(d) is an enlarged sectional view of the flow-regulating plate, as viewed in the direction of arrows D-D in FIG. 3(a).
FIG. 4 is a perspective view of a stack comprising a number of membrane separation elements in exploded state.
FIGS. 5 are schematic views of an inner casing of the present invention, in which FIG. 5(a) is an exploded perspective view for explanation of a method of fastening a membrane separation element to a lower half of the inner casing; and FIG. 5(b) is a plan view of a pipe.
FIG. 6 is a cross sectional view of a membrane separation element.
FIGS. 7 are schematic views of a membrane separation element, in which FIG. 7(a) is a plan view illustrating an example of cuts formed around a through-hole of a support plate of the membrane separation element; and FIG. 7(b) is a cross sectional view taken along line VII-VII in FIG. 7(a).
FIGS. 8 are schematic views of a membrane separation element, in which FIG. 8(a) is a plan view illustrating another example of the cuts formed around the through-hole of the support plate of the membrane separation element; and FIG. 8(b) is a cross sectional view taken along line VIII-VIII in FIG. 8(a).
FIG. 9 is an explanatory view showing the flow of back wash.
FIG. 10 is a view illustrating an example of fluctuations in transmembrane pressure resulting from the back wash.
FIGS. 11(a) and 11(b) are schematic flowcharts of a cross-flow membrane separation process.
FIG. 12 is a vertical cross sectional view of the conventional membrane separation apparatus.
FIG. 13 is a cross sectional view taken along line XIII-XIII in FIG. 12.
FIG. 14 is a schematic cross sectional view of the membrane separation apparatus according to another example of the present invention.
FIGS. 15 are schematic views of the membrane separation apparatus according to another example of the present invention, in which FIG. 15(a) is a schematic side view of an inner casing disposed in the pressure vessel; FIG. 15(b) is a schematic side view of membrane separation element groups disposed in the inner casing; and FIG. 15(c) is a view as viewed in the direction of arrow C in FIG. 15(a).
FIGS. 16 are schematic views of the membrane separation apparatus according to still another example of the present invention, in which FIG. 16(a) is a schematic cross sectional view of the membrane separation apparatus according to another example of the present invention; FIG. 16(b) is a schematic cross sectional view as viewed in the direction of arrows B-B in FIG. 16(b); and FIG. 16(c) is a schematic cross sectional view as viewed in the direction of arrows C-C in FIG. 16(a).

### BEST MODE FOR CARRYING OUT THE INVENTION

That is, according to the essential feature of the present invention, a membrane separation apparatus is characterized by that it comprising a pressure vessel having a water inlet at a first end and a concentrate outlet at a second end; inner casings disposed along a longitudinal axis of the pressure vessel; a flow-regulating plate disposed on the side of the water inlet of the pressure vessel; stacks of membrane separation elements respectively disposed in the inner casings; spacers disposed between the adjacent membrane separation elements, the spacers also serving as seal members; each stack of membrane separation elements and the spacers therein together defining a through-hole extending from a first side to a second side, of the stack of membrane separation elements; the inner casings having a permeate discharge passage along the longitudinal axis thereof, and the permeate discharge passage being communicated with the through-hole of each stack of membrane separation elements; wherein water that has been fed into the pressure vessel via the flow-regulating plate permeates through the membrane separation elements and is discharged to the outside via the through-holes and the permeate discharge passage.

In the present invention in which the flow-regulating plate is disposed on the side of the water inlet of the pressure vessel, water fed into the vessel is regulated and therefore does not cause channeling, allowing the flow rate of water to a relatively high level. Although depending on the type and behavior of water to be treated, it is possible to achieve a flow rate of 0.5-2.0 m/sec. Where less than 0.5 m/sec, sufficient permeate flux cannot be produced. Even where exceeding 2 m/sec, only insufficient energy consumption is made. In the present invention, even without taking a method involving feeding pressurized water into the pressure vessel, it is possible to carry out membrane separation of water fed into the pressure vessel by keeping the permeate discharge side under negative pressure (not higher than 0.1 MPa). For treatment of domestic wastewater (a reverse osmosis membrane), latex wastewater, filter backwash wastewater (an ultrafiltration membrane) and the like, it is preferable to feed water via a pressurizing system into the pressure vessel. For some types of high-concentration sludge (e.g., activated sludge) and the like, it is preferable to feed water via a negative pressure system into the pressure vessel.

Water that has been fed into the pressure vessel via the flow-regulating plate permeates through the membrane separation elements and is discharged to the outside via the through-hole and the permeate discharge passage of each inner casing. For this, a pipe is inserted into the through-hole, and the pipe has a permeate discharge groove along the lengthwise direction thereof. This permeate discharge groove is defined on the outer circumference of the pipe. The description will be made for the following embodiment (and the respective examples) by taking for example the case where the "pipe" is used as a member defining the permeate discharge groove, while the present invention is not necessarily limited to this arrangement so that a "solid rod" may be used in place of the pipe according to needs and circumstances. Where the solid rod is used, the permeate discharge groove is defined on the outer circumference in the lengthwise direction thereof.

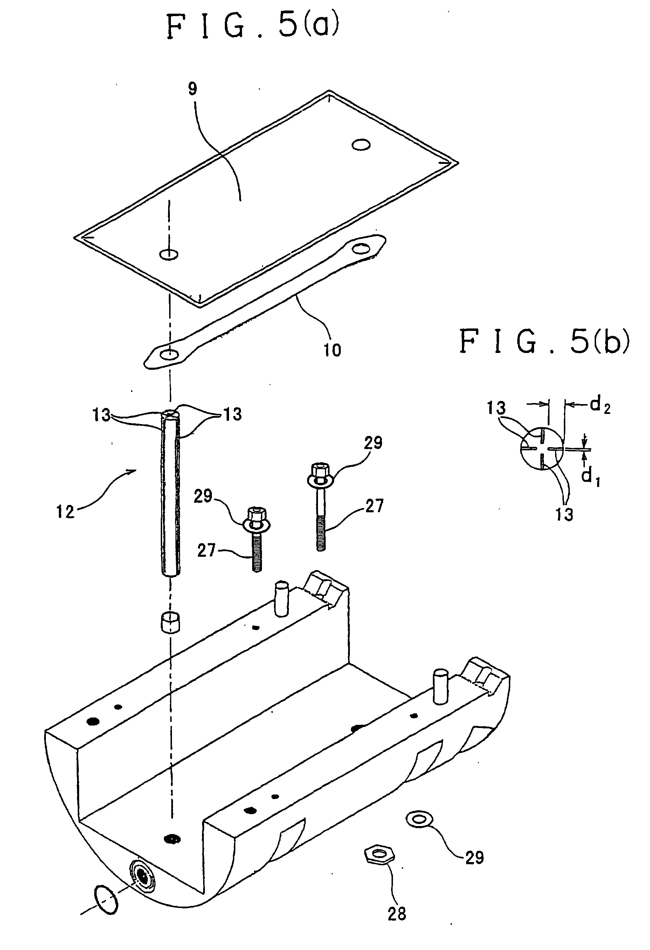

This pipe serves as a permeate passage as well as serving to fix the membrane separation elements in position, thus providing an apparatus having a simplified structure for the permeate discharge. The permeate discharge groove defined on the pipe makes permeate easy to flow and suppress the occurrence of unnecessary pressure loss for permeate. In order to prevent plugging of this permeate discharge groove in a short period of time, it is preferable to define a groove having a cross sectional area of 0.5-1.0 mm × 0.5-1.0 mm (d₁ × d₂ in FIG. 5(b)). It is also preferable to provide more than one permeate groove, in which several (e.g., 2-8) grooves are defined with a certain spacing.

The length of each inner casing is preferably set to be substantially equal along the longitudinal axis of the pressure vessel to the length of the stack of the membrane separation elements, thereby forming substantially no space between the adjacent inner casings along the longitudinal axis of the pressure vessel. That is, forming no space between the adjacent inner casings prevents deposition of suspended solid therein.

The description was made for this embodiment by taking for example the case where the length of the inner casing is substantially equal along the longitudinal axis of the pressure vessel to the length of the stack of the membrane separation elements, while the present invention is not necessarily limited to this arrangement. As long as substantially no space is formed between the adjacent stacks of the membrane separation elements (membrane separation element groups), the length of the inner casing can be equal or different from the length of the stack of the membrane separation elements along the longitudinal axis.

The ratio of short side to long side of the membrane separation elements having a rectangular flat membrane shape is 1:1-1:3, and the through-hole preferably lies on the bisector of the short side. This is because where the ratio of short side to long side exceeds 1:3, it is difficult to fabricate the membrane separation element through ultrasonic welding or the like, and even where the membrane separation element having a ratio of short side to long side exceeding 1:3 can be produced, such element has only a small membrane area, and the through-hole lying on the bisector of the short side can equally draw permeate to the through-hole. With this arrangement in which the membrane separation elements have a rectangular flat membrane shape; the ratio of short side to long side is 1:1 to 1:3; and the through-holes lie on the bisector of the short side, there is an advantage of achieving easy fabrication (cutting, welding) of the membrane separation element which can be backwashed even though it is a flat sheet membrane. It is also possible to achieve even water collection by positioning the through-holes on the bisector of the short side.

It is preferable to employ an arrangement where each membrane separation element has a five-layer structure of a permeable membrane, a space retaining member, a support plate, a space retaining member and a permeable membrane laminated together in this order, and the support plate has at least one cut that is located around and extends to the through-hole. Permeate in each membrane separation element tends to permeate through the permeable membranes and drain cloth (non-woven cloth or the like) of the space retaining members, which act as flow passages (drain) for permeate and reach the through-hole; however it is likely to prevent permeate from smoothly flowing from the membrane separation element to the through-hole since the spacers serving also as seal members are disposed between the adjacent membrane separation elements so that the spacers press the membrane separation elements from above and below. For this, at least one cut is defined in the support plate around the through-hole, which extends to the through-hole, can reduce the pressure loss of permeate which permeates through each membrane separation element and secure smooth flow of permeate into the through-hole.

Microfiltration membranes, ultrafiltration membranes, nano-filtration membrane or reverse osmosis membrane can be used as the permeable membranes. Changing the type of the permeable membranes according to the intended use produces an effect to make themselves adaptable to various applications thereof.

Where gas is entrained in water to have the two-phase flow of water and gas and this flow is sent to the pressure vessel, it is expectable to produce a washing effect (a fouling and plugging prevention effect) on the membrane separation elements by gas entrained in water. As this gas, air or nitrogen can be used.

Gas may be intermittently entrained in water rather than successively. For example, by performing the entrainment of pressurized air in water once a day, it is expectable to remove suspended solid with air bubbles, thus making membrane fouling and plugging hard to occur in the membrane separation elements.

Also, it is possible to remove suspended solid deposited on the membrane surface by flowing pressurized backwash water or air-entrained backwash water into the vessel from the permeate discharge side thereof. As the backwash water, permeate can be used. The pressure of the backwash water is preferably 0.05-0.2 MPa and more preferably 0.05-0.1 MPa. This is because under pressure exceeding 0.2 MPa, the membrane may be broken and a sufficient washing effect can be produced with a pressure of 0.05-0.1 MPa.

The membrane separation apparatus of this embodiment can be used in cross-flow filtration, dead-end filtration or the like.

### (EXAMPLES)

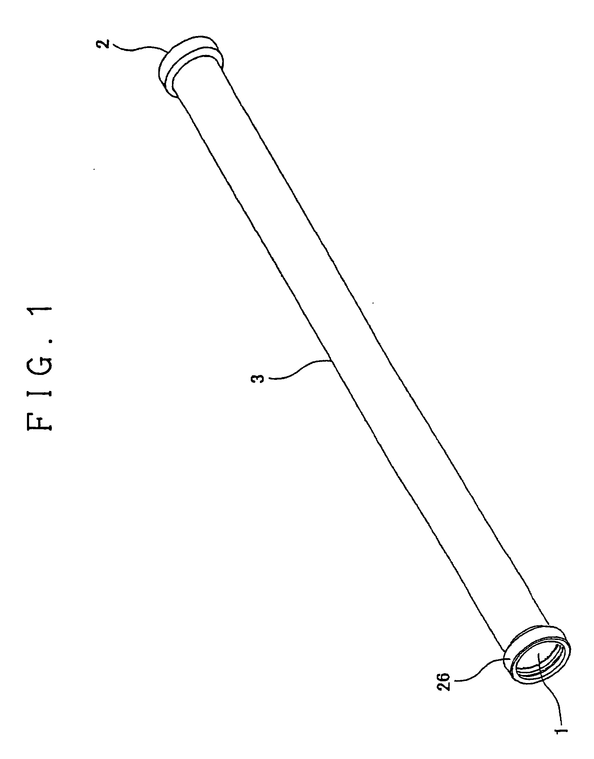

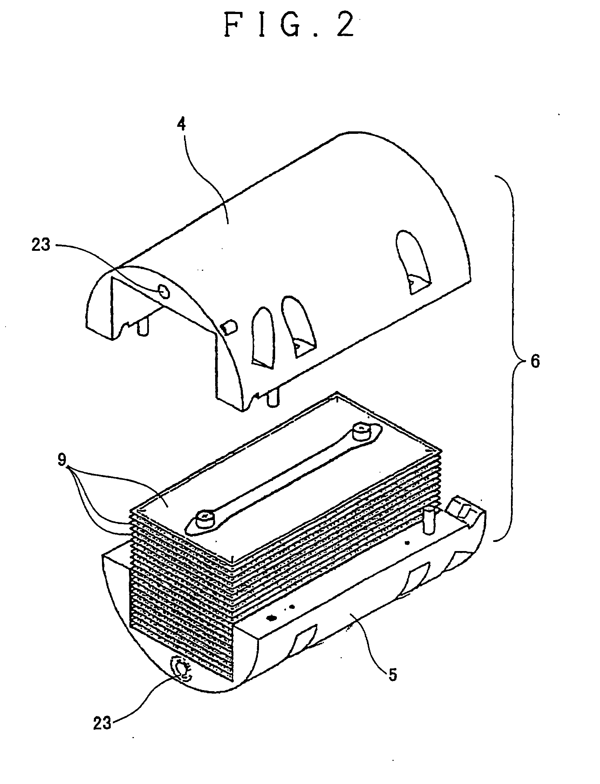

The examples of the present invention will be described with reference to the attached drawings. FIG. 1 is a perspective view of a pressure vessel 3 having a water inlet 1 at a first end and a concentrate outlet 2 at a second end. As illustrated in FIG. 2, a large number of inner casings 6, each made up of an upper half 4 and a lower half 5, are disposed adjacent to each other along a longitudinal axis of the pressure vessel.

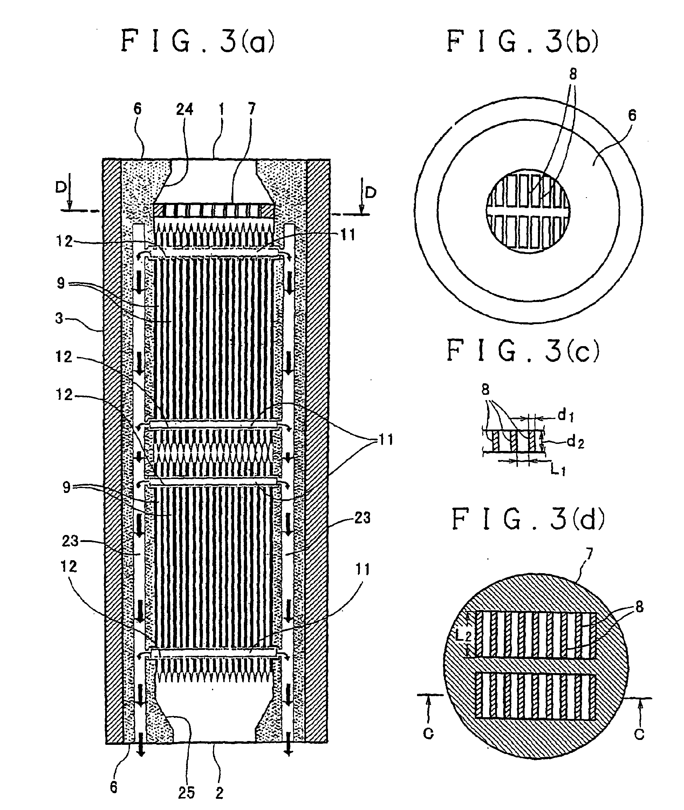

As illustrated in FIG. 3(a), a flow-regulating plate 7 is mounted on the side of the water inlet 1 of the pressure vessel 3. The flow-regulating plate 7 has plate-like members 8 extending in a circular opening defined on the side of the water inlet 1 of the pressure vessel 3 in a comb-like formation with a certain space between the adjacent plate-like members as aligned in two rows, as illustrated in FIG. 3(b). As illustrated in FIG. 3(d), an enlarged sectional view of the flow-regulating plate 7 as viewed in the direction of arrows D-D in FIG. 3(a), a length L₂ of the plate-like members 8 is 30-60 mm and preferably 40-50 mm. As illustrated in FIG. 3(c), a part of the How-regulating plate 7 as viewed in the direction of arrows C-C in FIG. 3(d), the cross sectional size d₁ of each plate-like member 8 is 1-10 mm and preferably 2-5 mm, while d₂ is 5-20 mm and preferably 7-15 mm. A space L₁ between the adjacent plate-like members 8 is 5-20 mm and preferably 7-10 mm. The flow-regulating plate of the two-row arrangement allows water to be substantially uniformly distributed into the inlet side of the inside of the pressure vessel and introduced into the vessel with its flow regulated.

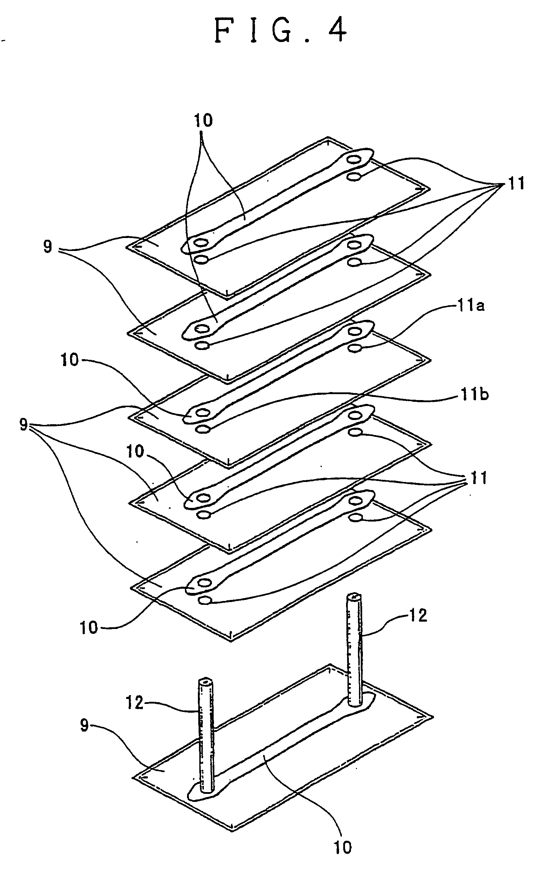

As illustrated in FIG. 2, a large number of membrane separation elements 9 are stacked together within each inner casing 6. Also, as illustrated in FIG. 4, spacers 10, which also serve as seal members, are disposed between the adjacent membrane separation elements 9, 9.

As illustrated in FIG. 3(a), through-holes 11 are formed as extending through the membrane separation elements 9 and also the spacers from a first side to a second side, of a stack of the membrane separation elements 9, and pipes 12 are inserted in the through-holes 11. As illustrated in FIG. 5(a), four permeate discharge grooves 13 are defined on each pipe 12 along the lengthwise direction thereof.

As illustrated in FIG. 4, the membrane separation elements 9 each have a rectangular, flat sheet membrane shape, and in this example, the ratio of short side to long side is 1:2, and the through-holes 11 for receiving the pipes lie on the bisector of the short side. Specifically, it is preferable to have a long side of 100-300 mm and a short side of 50-150 mm. If, with the excessive length, the membrane separation elements are hard to be fabricated with ultrasonic welding and also it is unlikely to conduct back wash (because of possible break).

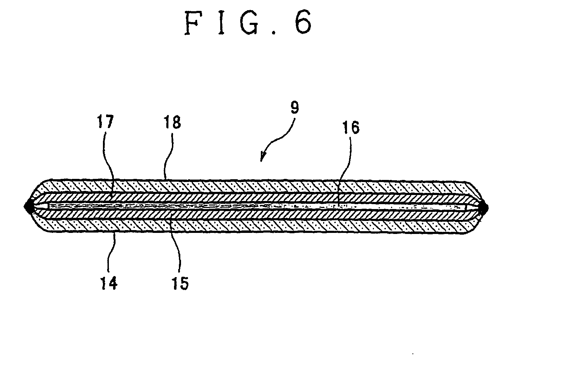

As illustrated in FIG. 6, the membrane separation elements 9 each have a five-layer structure of a permeable membrane 14, a non-woven cloth 15, a support plate 16, a non-woven cloth 17 and a permeable membrane 18 laminated together in this order. The permeable membrane 14, the non-woven cloth 15, the non-woven cloth 17 and the permeable membrane 18 are welded together along their edges with ultrasonic welding. While the material of the support plate 16 may be a synthetic resin or metal, it is essential that a material used allows the membrane separation elements 9 to maintain their given shape.

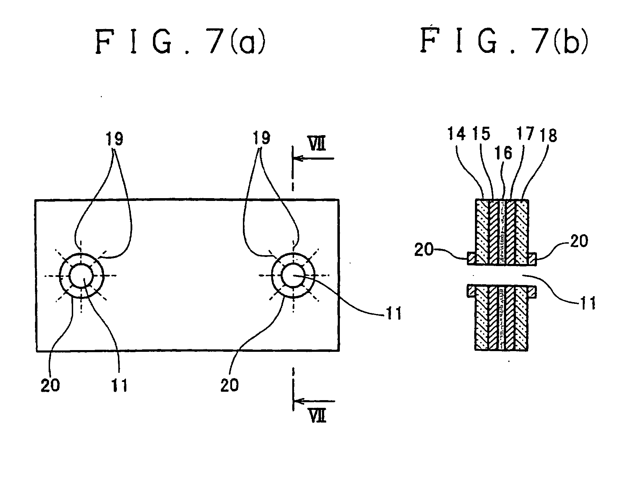

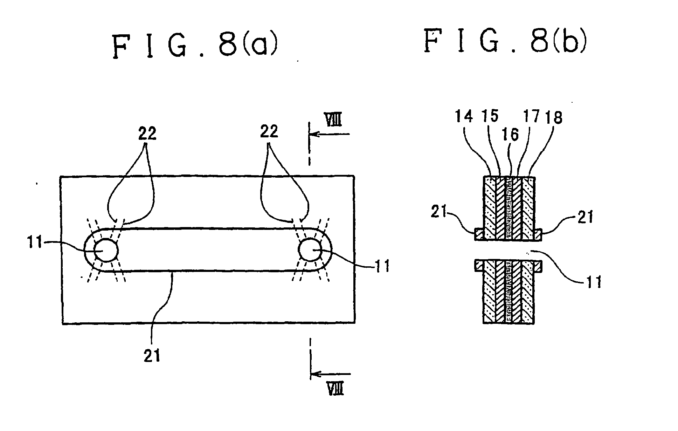

As illustrated in FIG. 7(a), the support plate 16 has eight cuts 19 around each through-hole 11, which cuts extending to the corresponding through-hole. A reference numeral 20 represents a ring-shaped gasket, and the cuts 19 extend to the outside of the corresponding gasket 20. As the gaskets, oval gaskets 21 as illustrated in FIG. 8(a) may be employed. In this case, cuts 22 extend to the outside of the corresponding gasket 21. The gaskets 20, 21 correspond to the spacers 10 combined with a sealing capability.

As illustrated in FIG. 3(a), the inner casing 6 has permeate discharge passages 23 along the longitudinal axis, while the pipes 12 inserted in the through-holes 11 are communicated with the permeate discharge passages 23.

As illustrated in FIG. 3(a) or FIG. 4, each membrane separation element 9 has two through-holes 11 so that water flows which has passed through the permeable membrane 14 or 18 and the non-woven cloth 15 or 17 of the membrane separation element and reached through-holes 11a, 11b, are joined in the permeate discharge passages 23 and discharged to the outside of the membrane module.

Cuts 19 or 22 which are, as illustrated in FIG. 7(a) or FIG. 8(a) formed in each support plate 16 around the through-holes 11 so as to extend to the through-holes 11, serve as permeate passages along with the non-woven clothes, so that water permeating through the membrane separation elements has reduced pressure loss and permeate is allowed to smoothly flow into the through-holes 11. The number of cuts 19 or 22 are not limited to specific numbers, as long as they can reduce the pressure loss of permeate and secure smooth flow of permeate into the through-holes 11. In actual use, 4-20 cuts may be formed around each through-hole. The width of each cut is preferably about 0.5 mm.

As illustrated in FIG. 2, the length of each inner casing 6 (an accommodation section for the membrane separation elements (a membrane separation element group)) is substantially equal along the longitudinal axis of the pressure vessel to the length of the stack of membrane separation elements 9 (a membrane separation element group) and therefore substantially no space is formed between the stacks of the membrane separation elements 9 of the adjacent inner casings.

Thus, as illustrated in FIGS. 3, water introduced into the pressure vessel 3 through the flow-regulating plate 7 permeates through the membrane separation elements 9 and is discharged to the outside through the pipes 12 inserted in the through-holes 11 and the permeate discharge passages 23 formed in the inner casing 6, thereby discharging concentrate to the outside through the concentrate outlet 2. An inlet portion and an outlet portion of the pressure vessel 3 gradually increases or decreases in diameter so as to prevent the formation of swirls or vortices in the flow. Therefore, such a diameter-increasing portion 24 or a diameter-decreasing portion 25 can reduce pressure loss of feed water as much as possible.

The membrane separation apparatus of the present invention can be dismantled in remarkably easy manner, so that each inner casing can easily be pulled out from the pressure vessel 3 by detaching a flange 26 of FIG. 1 that fixes the inner casing to the pressure vessel 3. In general, 5-10 inner casings are mounted inside the pressure vessel 3. As illustrated in FIG. 2, each inner casing 6 is made up of an upper half 4 and a lower half 5, which are fastened together with bolts 27, nuts 28 and washers 29, as illustrated in detail in FIGS. 5, so that the inner casing 6 can be separated into two halves simply by loosening the structure of a bolt-nut threaded engagement. As illustrated in FIG. 2, a stack of the membrane separation elements 9 can be exposed to the outside by removing the upper half 4 of the inner casing 6. As illustrated in FIG. 4, spacers 10, which serve also seal members, are interposed between the vertically adjacent membrane separation elements 9, while the pipes 12 penetrate through the stack of the membrane separation elements 9 as skewers, so that the dismantling can easily be achieved by removing the membrane separation elements 9 and the spacers 10. The pipes 12 may be pulled out and removed subsequent to removal of the membrane separation elements 9 and the spacers 10, or the pipes 12 may be first pulled out and removed for the subsequent removal of the membrane separation elements 9 and the spacers 10.

Now, the description will be made for the effects of the characteristic structure of the present invention, based on a specific experiment.

### (1) Effect of the cuts

As illustrated in FIGS. 7 or 8, it can be expected that the pressure loss of permeate passing through each membrane separation element is reduced by the formation of the cuts around the through-holes 11 of the support plate 16 of the membrane separation element. Therefore, an experiment was conduced to confirm its effect, of which explanation will be made below.

For the membrane separation element in the arrangement as illustrated in FIG. 6, the permeable membranes 14, 18 are in the form of ultrafiltration membranes; the support plate 16 is made of ABS resin (the size of the membrane separation element: 100 mm × 200 mm); the spacer 10 is made of EPDM (Ethylene Propylene Diene Methylene); a total of twenty-eight membrane separation elements 9 were stacked together (100 mm × 100 mm × 200 mm) (corresponding to the "membrane separation element groups") and were installed in each inner casing 6 having a diameter of 150 mm, as illustrated in FIG. 2; and five inner casings thus arranged were disposed in contact with each other in the pressure vessel 3, as illustrated in FIGS. 3. Clear water was fed into a conduit (not shown) connected to the flow-regulating plate 7 on the inlet side of the pressure vessel 3 and filtered with a permeate flux of 100 l/m²/hr.

### a. In case where the cuts are formed in the support plate

In case where the eight cuts 19 as illustrated in FIGS. 7 were formed in the support plate 16 of the membrane separation element 9, the pressure of clear water on the inlet side of the pressure vessel 3 was 0.2 MPa, while the pressure of water discharged through the permeate discharge passages 23 was 0.18 MPa, and therefore it has been found that the pressure loss was 0.02 MPa.

### b. In case where the cuts are not formed in the support plate

In case where the cuts 19 or 22 as illustrated in FIGS. 7 or 8 were not formed in the support plate 16 of the membrane separation element 9, the pressure of clear water on the inlet side of the pressure vessel 3 was 0.25 MPa, while the pressure of water discharged through the permeate discharge passages 23 was 0.18 MPa, and therefore it has been found that the pressure loss was 0.07 MPa. Thus, it is apparent that permeate within the membrane separation element is discharged only through the non-woven clothes when no cuts are formed in the support plate 16 of the membrane separation element, resulting in an increased pressure loss of permeate.

### (2) Effect resulting from omission of spaces between the membrane separation elements of the adjacent inner casings

When a space exists between the membrane separation elements of the adjacent inner casings, suspended solid is deposited in the space, which results in increased pressure loss in a flow passage. Therefore, as illustrated in FIG. 2, the length of the inner casing 6 is set to be substantially equal to the length of the membrane separation element 9 along the longitudinal axis of the pressure vessel so as not to substantially cause a space between the membrane separation elements 9 of the adjacent inner casings 6, as illustrated in FIGS. 3. This prevents deposition of suspended solid so that reduction of the pressure loss in the flow passage can be expected.

In consideration of the above, as illustrated in FIGS. 3, when the operation is made with substantially no space between the membrane separation elements 9 of the adjacent inner casings 6, the pressure loss resulting from subtracting the pressure of water discharged through the permeate discharge passages 23 from the pressure of clear water on the side of the water inlet 1 of the pressure vessel 3 was 0.01 MPa. On the other hand, when the operation was made with a space of 15 mm between the membrane separation elements of the adjacent inner casings 6, 6, the pressure loss resulting from the subtraction of the pressure of water discharged through the permeate discharge passages 23 from the pressure of clear water on the side of the water inlet 1 of the pressure vessel 3 was 0.02 MPa, and it has been found that the pressure loss in the flow passage was increased. If a pretreatment step (e.g., removing deposited, suspended solid) is sufficiently performed, the membrane separation can be done even if there is a space of about 10 mm or smaller between the membrane separation elements of the adjacent inner casings.

With the structure having substantially no space between the membrane separation elements of the adjacent inner casings 6, the entire length of the pressure vessel can be shortened about 7.5 %.

### (3) Effect of back wash

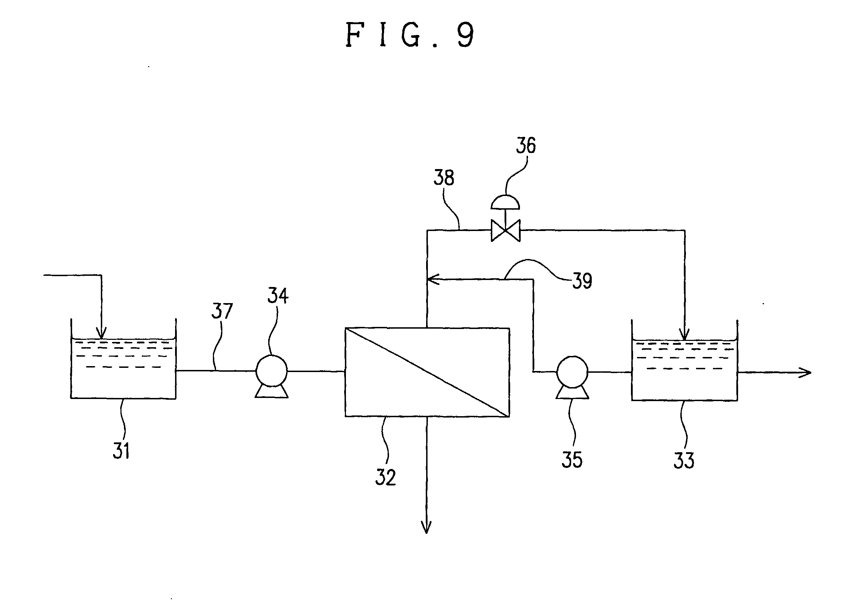

Activated sludge (MLSS: 5000-30000 mg/liter) was fed into the pressure vessel 3 having the structure as illustrated in FIGS. 3 and membrane separation was performed for 6 hours. The transmembrane pressure difference (the difference between the pressure of water to be treated on the inlet side of the pressure vessel 3 and the pressure of water discharged through the permeate discharge passages 23), which was originally about 0.1 MPa, was increased to 0.15 MPa. This increase was assumed due to adhesion or deposition of suspended solid in the structural elements of the membrane separation elements and accordingly the back wash was performed by a back wash system having a flow as illustrated in FIG. 9. In explanation of FIG. 9, reference numeral 31 represents a water tank, 32:a pressure vessel (a membrane module equipped with the membrane separation elements of the present invention), 33:a permeate tank, 34:a water feeding pump, 35:a back wash water feeding pump and 36:a flow regulation valve of permeate.

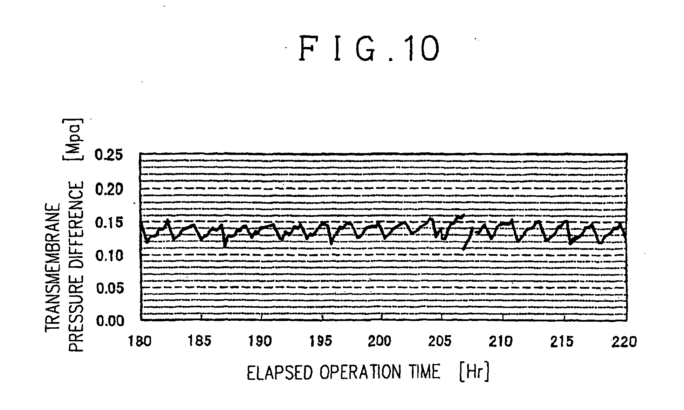

That is, water to be treated (raw water) stored in the water tank 31 is fed into the membrane module 32 by the water feeding pump 34 via a conduit 37, and permeate is fed into the permeate tank 33 via a conduit 38. At the time of back wash, the water feeding pump 34 is stopped and the water feeding pump 35 is actuated to add back pressure (0.1 MPa) to the membrane separation elements within the membrane module 32 via a conduit 39, and suspended solid attached to the membrane separation elements 9 was washed away with clear water and discharged to a concentrate side through the concentrate outlet 2 (see FIGS. 3). The back wash water feeding pump 35 was intermittently operated (several minutes every 120 minutes) by using a timer. As a result of the back wash, the transmembrane pressure difference was recovered to 0.11-0.12 MPa and therefore the operation of the back wash water feeding pump 35 was stopped, while the operation of the water feeding pump 34 was resumed and the membrane separation was continued. An example of fluctuations in transmembrane pressure difference resulting from the back wash is illustrated in FIG. 10. The vertical axis of FIG. 10 represents the transmembrane pressure difference, and the horizontal axis represents the elapsed operation time of the membrane separation apparatus. The back wash water feeding pump was not continuously operated, but intermittently operated for several minutes every two hours. In a graph looking like a saw blade in FIG. 10, each of hills and valleys appear about every two hours, in which the valleys represent recovery of the transmembrane pressure by the back wash.

The timing at which the back wash water feeding pump 35 is actuated by the timer can be selectively determined according to the degree of fouling in the membrane separation elements.

### (4) Comparison between a conventional membrane separation equipment and the membrane separation apparatus of the present invention

The prerequisites as compared for achieving treatment of domestic wastewater in the amount of 10 m³/day to have BOD reduced to 20 ppm or lower in water to be treated, are stated in Table 1 as follows.

**(TABLE 1)**

| | Limit Concentration of Suspended Solid of Feed Water | Required Pretreatment Equipment | Area Required for Installation of the Entire Equipment |
|---|---|---|---|
| Present Invention | ≦several 100 ppm | Strainer | 4 m² |
| Tubular Module | ≦several 100 ppm | Strainer | 6 m² |
| Hollow Fiber Module | ≦several 10 ppm | Coagulation Sedimentation/Sand Filtration | 10 m² |
| Spiral Wound Module | ≦several ppm | Coagulation Sedimentation/Sand Filtration/Microfiltration | 12 m² |

As shown in TABLE 1, in the present invention and the tubular module, the limit concentration of suspended solid of water (feed water) for treatment is relatively high so that only a simple equipment such as a strainer is enough for pre-treatment. However, in the spiral wound module and the hollow fiber module, the limit concentration of suspended solid of water to be treated (feed water) is low so that pretreatment equipments such as a coagulation sedimentation equipment and a sand filtration equipment, and further a microfiltration equipment are required. As a result, a large area for installation is necessitated.

Comparing the concentration of suspended solid required to water (raw water) in TABLE 1, the present invention is on the same level as the tubular module so that a strainer or its equivalent is enough for the pretreatment. However, as shown in TABLE 2, the present invention can take a higher membrane packing density (allows the membrane separation elements to be packed in the module with high density), and the lower pressure loss, as compared with the tubular module. A large value of the membrane packing density can be taken because flat sheet membrane elements are stacked together and therefore can be tightly packed with no space therebetween.

On the other hand, in case where relatively-large cylindrical tubular membranes (a diameter of about 5-10 mm) are inserted into a cylindrical module, the membrane packing density is lowered because a space is consequentially caused between the adjacent cylindrical tubular membranes.

A high membrane packing density can allow the enlargement of the necessary flow passages when a module having the same membrane area is fabricated. Even if the flow rate is low, fluid containing a large solid content is easy to flow (the Reynolds number is increased) because of the enlarged fluid passages, and therefore it is possible to achieve membrane separation even with low flow rate, according to the present invention.

**(TABLE 2)**

| | Membrane Packing Density | Flow Rate of Feeding Water |
|---|---|---|
| Present Invention | 10 m²/module | 1 m/sec |
| Tubular Module | 2 m²/module | 2-3 m/sec |

### (5) Effects of the membrane separation apparatus of the present invention

The test results will be summarized as below.
① The pressure loss of permeate can be improved by having cuts in the support plate of a membrane separation element.
② The entire length of the pressure vessel can be shortened 7.5 % by omitting the space between the membrane separation elements in the adjacent inner casings. Also, omission of the space prevents deposition of suspended solid in such a space, which contributes to reduction of the pressure loss of water to be treated.
③ A bulky pretreatment equipment is not necessary because of a moderate quality of water required to raw water, and therefore only a small area is enough for installation of the entire equipment and the membrane separation can be performed with high efficiency even with low flow rate of water to be treated. Thus, low flow rate of water is better to contribute to high efficiency, but still there is need for a minimum flow rate for the purpose of preventing membranes from being fouled and plugged.

The present invention is not necessarily limited to the above examples, while various modifications may be made without departing from the scope of the present invention.

The description will be made for another example with reference to the drawings as attached.

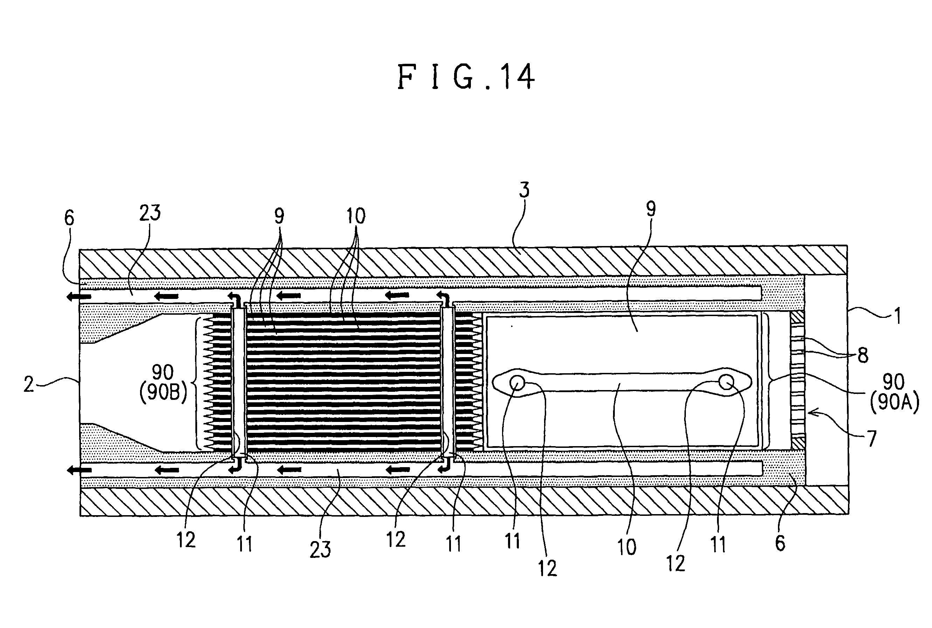

FIG. 14 is a schematic cross sectional view of the membrane separation apparatus according to another example of the present invention. The basic structural elements of the membrane separation apparatus of this example are basically the same as those as illustrated in FIGS. 3 and the like and therefore the same reference numerals are allocated thereto for omission of the description on them and the description will be mainly made for the differences from the above example.

As illustrated in FIG. 14, the membrane separation apparatus of this embodiment includes the pressure vessel 3, the inner casing 6 disposed in this pressure vessel 3, two membrane separation element groups 90 (90A, 90B) disposed in this inner casing 6, the flow-regulating plate 7 disposed on the inlet side for water to be treated in the inner casing 6. Herein, the membrane separation element groups 90 as used each may have a size of 100 mm × 100 mm × 200 mm.

Each membrane separation element group 90 is made up of a stack of the plural membrane separation elements 9 and the spacers 10 disposed between the adjacent membrane separation elements 9. The through-holes 11 are formed in each membrane separation element group 90 as extending through the membrane separation elements 9 and the spacers 10 from a first side to a second side, of the stack. The pipes 12 are inserted in the through-holes 11. The four permeate discharge grooves 13 (see FIG. 5(a)) are defined on each pipe 12 along the lengthwise direction thereof.

In this embodiment, as illustrated in FIG. 14, the adjacent membrane separation element groups 90 (a first membrane separation element group 90A and a second membrane separation element group 90B) are disposed orthogonal to each other.

Water passing through (or permeating through) the membrane separation element groups 90 is ordinarily distributed along the surface of each membrane separation element formed into a flat shape. That is, a space between the adjacent membrane separation elements 9 defines a flow passage for water passing for treatment.

Accordingly, in the arrangement as illustrated in FIG. 14, with the membrane separation element groups 90 disposed orthogonal to each other, the flow passages of water in the membrane separation element groups 90 are necessarily oriented orthogonal to each other.

In this example, the flow-regulating plate 7 located on the inlet side for water to be treated is thus disposed orthogonal to the first membrane separation element group 90A adjacent to this flow-regulating plate 7. That is, it is so structured that the flow passages of water at the flow-regulating plate 7 (flow passages between the plate-like members 8) are oriented orthogonal to the flow passages of water in the first membrane separation element group 90A.

In this example, as described in the aforesaid example, the first and second membrane separation element groups 90 are also disposed adjacent to each other with substantially no space therebetween (for example, disposed with the adjacent membrane separation element groups 90 held in contact with each other).

In this example, for the illustrative purpose, only the permeate discharge passages 23 communicated with the through-holes 11 of the second membrane separation element group 90B are illustrated, while permeate discharge passages (not illustrated) communicated with the through-holes 11 of the first membrane separation element group 90A are formed at positions substantially 90. away from the permeate discharge passages 23 in the inner casing 6.

The thus arranged membrane separation apparatus of this example produces the following effects in addition to the effects produced in the aforesaid example.

In the example of FIG. 14, the adjacent membrane separation element groups 90A, 90B are disposed substantially orthogonal to each other. With this arrangement in this embodiment, the flow of water to be treated in the membrane separation apparatus is likely to be turbulent so that it is possible to prevent suspended solid from being deposited on the membrane surfaces (permeable membrane surfaces) of the membrane separation elements 9.

In the above respective examples (the examples illustrated in FIGS. 3 and 14), while the description was made by taking for example the case where the two membrane separation element groups are disposed in the inner casing, the present invention is not necessarily limited to this arrangement. According to needs and circumstances, one, or three or more membrane separation element groups may be disposed in the inner casing.

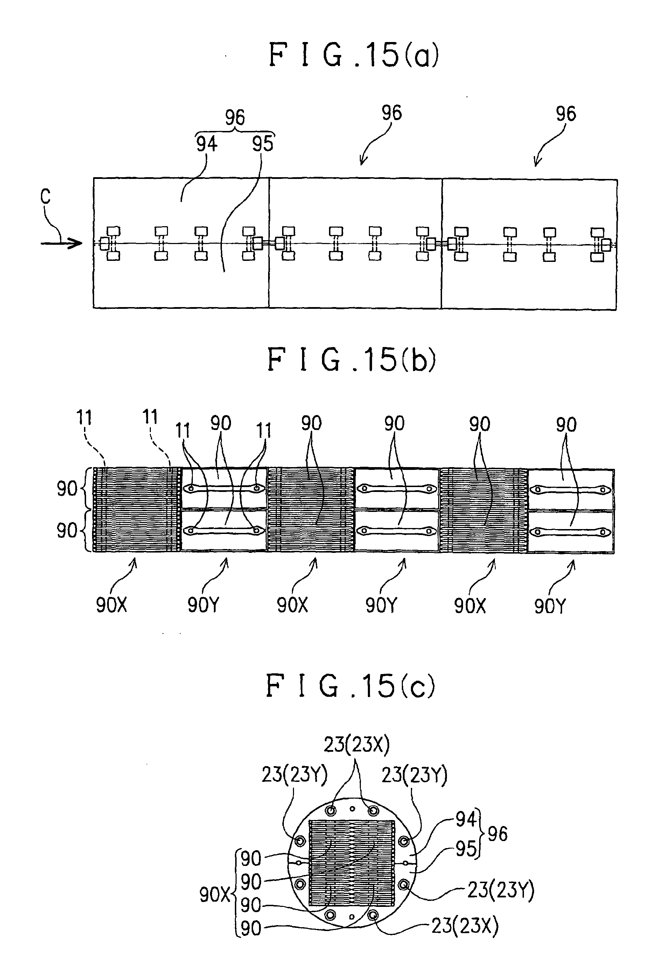

The description will be made for the arrangement with three or more (specifically eight) membrane separation element groups disposed in the inner casing, with reference to FIGS. 15.

FIGS. 15 are schematic views of the membrane separation apparatus according to another example of the present invention, and more specifically schematic views of the inner casing of the membrane separation apparatus and its inside structure, etc.

The apparatus of this example substantially includes the same structural elements as those of the above respective examples, except for the structure of the inner casing. Accordingly, the same reference numerals are allocated to the same structural elements as the aforesaid examples, while the description will be mainly made for the differences from the above embodiments.

FIG. 15(a) is a schematic side view of an inner casing 96 disposed in the pressure vessel (not illustrated), in which three inner casings 96 are connected to each other and disposed in the pressure vessel. FIG. 15(b) is a schematic side view of the membrane separation element groups 90 disposed in the inner casings 96. FIG. 15(c) is a view as viewed from the arrow C in FIG. 15(a).

As illustrated in FIGS. 15, in this example, the inner casings 96 each are made up of an upper half 94 and a lower half 95, and designed to be able to accommodate eight membrane separation element groups 90. Specifically, as illustrated in FIG. 15(b), a first membrane-separation-element block 90X and a second membrane-separation-element block 90Y, each block comprising four membrane separation element groups 90, are provided and are disposed orthogonal to each other in each inner casing 96.

The inner casing 96 has permeate discharge passages 23X formed in communication with the through-holes 11 of the first membrane-separation-element block 90X and permeate discharge passages 23Y formed in communication with the through-holes 11 of the second membrane-separation-element block 90Y.

According to the example of FIGS. 15, the plural (eight) membrane separation element groups 90 are disposed in each inner casing 96 so that a larger volume can be treated relative to the installation area.

Also, according to this example, it is so structured as to have in each inner casing 96 the first membrane-separation-element block 90X disposed substantially orthogonal to the second membrane-separation-element block 90Y. This arrangement can also produce the same effects of the example of FIG. 14. The basic structural elements, which are the same as those of FIGS. 3 and the like, also produce the same effects.

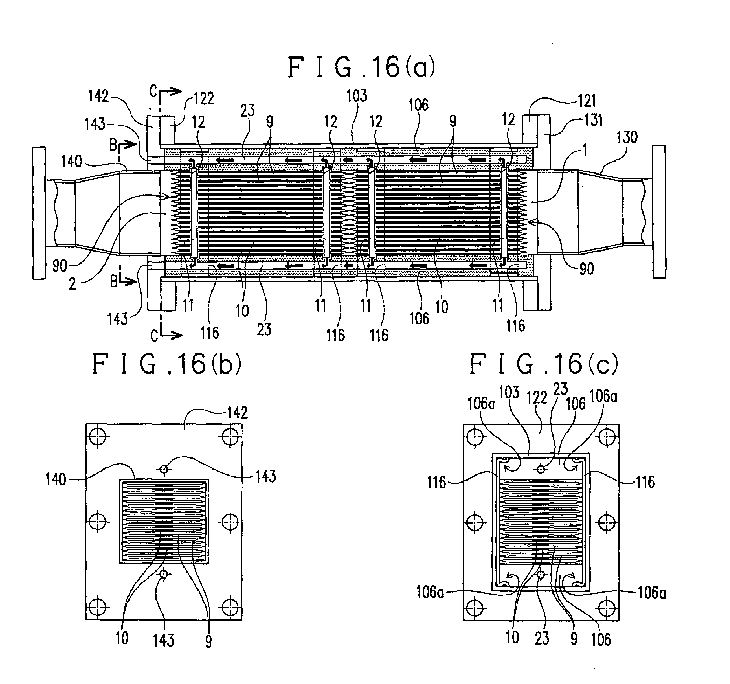

FIGS. 16 are schematic views of the membrane separation apparatus according to still another example of the present invention, in which FIG. 16(a) is a schematic cross sectional view of the membrane separation apparatus according to another example of the present invention; FIG. 16(b) is a schematic cross sectional view as viewed in the direction of arrows B-B in FIG. 16(a); and FIG. 16(c) is a schematic cross sectional view as viewed in the direction of arrows C-C in FIG. 16(a).

The membrane separation apparatus of this example is substantially made up of the same structural elements as those of the aforesaid examples, except that while the inner casings are disposed in the pressure vessel in the aforesaid examples, the membrane separation apparatus of this example is provided with no inner casings illustrated in the respective examples. Accordingly, the same reference numerals are allocated to the same structural elements of the aforesaid examples for omission of the description on them and the following description will be mainly made for the characteristic portions (the differences from the above examples) of this example.

As illustrated in FIGS. 16, the membrane separation apparatus of this example includes a pressure vessel 103 having a rectangular tube shape, water collecting members 106 having a plate-like shape provided in the pressure vessel 103, two membrane separation element groups 90 held between a pair of the water collecting members 106, and the like. Herein, the membrane separation element groups 90 each having a size of, for example, 100 mm × 100 mm × 200 mm, are used.

The membrane separation element groups 90 each are made up of a stack of the plural membrane separation elements 9 and the spacers 10 disposed between the adjacent membrane separation elements 9. The through-holes 11 are formed in each membrane separation element group 90 so as to extend through the membrane separation elements 9 and the spacers 10 from a first side to a second side, of the stack. The pipes 12 are inserted in the through-holes 11 and each pipe have the four permeate discharge grooves 13 along the lengthwise direction thereof (see FIG. 5(a)).

The pressure vessel 103 of the membrane separation apparatus of this example has flanges 121, 122 respectively provided on the sides of the water inlet 1 and the concentrate outlet 2. Disposed respectively on the sides of the water inlet 1 and concentrate outlet 2 are an inlet-side joint 130 and an outlet-side joint respectively having flanges 131, 142 designed to be connectable respectively to the flanges 121, 122. The flanges 121, 122 provided in the pressure vessel 103 are connected to the flanges 131, 142 provided in the joints 130, 140 by using fastening means comprising such as bolts and nuts. The flange 142 of the outlet-side joint 140 has permeate discharge passages 143 in communication with permeate discharge passages (later described) formed in the water collecting members 106.

In this example, as illustrated in FIGS. 16, the membrane separation apparatus is made up of the membrane separation element groups 90, each comprising the stack of the membrane separation elements 9, the spacers 10 and the like, and the plate-like water collecting members 106 which hold the membrane separation element groups 90 together. More specifically, the membrane separation element groups 90 are held between a pair of the water collecting members 106 that are in turn fastened with plural fastening bands 116 (corresponding to "fastening means" in the present invention). The membrane separation element groups 90 which have been thus fastened together by the pair of the water collecting members 106 and the fastening bands 116 are tightly held in the pressure vessel 103 of the rectangular tube shape, thus making up the membrane separation apparatus.

In the membrane separation apparatus of this example, the membrane separation element groups 90, each held between the pair of the water collecting members 106, are each fastened together by four fastening bands 116. These fastening bands 116 are provided at positions corresponding to the positions of the pipes 12 for the purpose of preventing leakage between the membrane separation element groups 90 and the pipes 12.

The water collecting members 106, which are designed to hold the membrane separation element groups 90 therebetween, each have mounting grooves 106a for mounting the fastening bands 116. In this example, it is possible to dispose the water collecting members 106 and the membrane separation element groups 90 in the pressure vessel 103 with the fastening bands 116 mounted in the mounting grooves 106a. These fastening bands 116 are made by using stainless steel, plastic, rubber or the like.

In this example, the membrane separation element groups 90 are disposed so as to have substantially no space between the adjacent membrane separation element groups 90, in the same manner as the aforesaid examples.

The thus arranged membrane separation apparatus of this example produces the following effects in addition to the effects of the examples illustrated in FIGS. 3 and the like.

In this example, the water collecting members 106 are provided in place of an inner casing of the other examples that holds the membrane separation element groups and has the permeate discharge passages. The water collecting members 106, in the same manner as the inner casing, have the permeate discharge passages 23 and serve to hold the membrane separation element groups 90, but have a different structure from the inner casing. Specifically, the inner casing is of a cylindrical shape for accommodating the membrane separation element group; on the other hand, the water collecting members 106 each are of a plate-like shape. Also, as illustrated in FIGS. 16, in this example, each membrane separation element group 90 is held between the pair of the water collecting members 106, while the water collecting members 106 and the membrane separation element group 90 are fastened together by using the fastening bands 116. The water collecting members 106 each have a width substantially equal to the width of the membrane separation element group 90, as illustrated in FIG. 16(c). The fastening bands 116 fasten the pair of the water collecting members 106 in contact with end portions of the water collecting members 106 and the membrane separation element group 90 so as to fasten the membrane separation element group 90 held between the water collecting members 106.

As described above, according to this example, with the membrane separation element group 90 held in position, only the thin-profile fastening bands exist on the lateral sides. On the other hand, in the aforesaid examples, the cylindrical inner casing is used and therefore there exists, on the lateral sides, a thickness substantially equal to the thickness above and below the membrane separation element group.

Therefore, according to this example, it is possible to make up the membrane separation apparatus without providing useless spaces on the lateral sides of the membrane separation element group 90 by using the plate-like water collecting members 106. The pressure vessel 103 can be reduced in size to an extent equivalent to the omission of this useless space. Accordingly, with the arrangement of this example, it is possible to reduce the installation area by about 30 % compared with a case where an apparatus having the same treatment capability is installed. It is a matter of course to achieve the cost-down by the reduction of the installation area. The water collecting members 106, which are made of plate-like members, can be easily produced, thereby achieving the cost-down as well as ease of fabrication.

In this example, as illustrated in FIGS. 16, the pressure vessel 103 is formed into a rectangular tube shape for matching in shape to the water collecting members 106 as well as the membrane separation element groups 90 in order to omit a dead space. This allows the overall shape of the membrane separation apparatus to be a square shape.

Accordingly, in this example, it is possible to easily stack plural membrane separation apparatuses together. That is, in the above examples, the membrane separation apparatus is made up of a cylindrical pressure vessel in order to resist high pressure, and therefore plural apparatuses cannot be simply stacked together but require some supporting members for stacking. According to this example in which the membrane separation apparatus is of a square shape, plural apparatuses can be more easily arranged in a stacked structure.

The membrane separation apparatus of this example can solely achieve the reduction of the installation area, as described above, and also when plural apparatuses are to be arranged in a stacked structure, supporting members to be equipped to the apparatuses can be omitted. As a result, the installation area can be reduced with a higher level compared to the case where a single membrane separation apparatus is solely arranged.

Where the pressure vessel 103 of the rectangular tube shape is to be used, it is preferable to use as a permeable membrane a membrane other than a reverse osmosis membrane in light of the balance between the manufacturing cost and pressure withstanding capability of the pressure vessel.

In FIGS. 16, the pressure vessel 103 is provided with the flanges 121, 122. The present invention is not necessarily limited to this arrangement. According to needs and circumstances, the pressure vessel 103 of each membrane separation apparatus may not be provided with the flanges 121, 122. Therefore, it is possible to employ for example an arrangement in which a predetermined number of the membrane separation apparatuses each having no flanges in the pressure vessel 103 are stacked together to form a block of the membrane separation apparatuses, each block being thus provided with flanges, joints and the like.

With the above arrangement, it is possible to further reduce the installation area in a case where the membrane separation apparatuses are stacked together.

For the example of FIGS. 16, the description was made for the case where the water collecting members each are formed into a plate-like shape. The present invention is not necessarily limited to this arrangement. As long as the water collecting members have the permeate discharge passages and are able to hold the membrane separation element group therebetween, their shapes and arrangements are not limited to specific ones. Therefore, the water collecting members may be formed by using, for example, pipe members having a circular or elliptical cross section. Although the description was made for the pressure vessel having a rectangular cross section, the present invention is not limited thereto. The vessel having a square cross section may be used.

Although FIGS. 16 illustrate an arrangement with no flow-regulating plate, the present invention is not necessarily limited to this arrangement. Still in the membrane separation apparatus having an arrangement as illustrated in FIGS. 16, it is preferable to provide the flow-regulating plate in the water inlet 1 according to needs and circumstances.

Further, the adjacent membrane separation element groups 90 may be disposed substantially orthogonal to each other in the same manner as the example of FIG. 14, according to needs and circumstances.

While the above descriptions were made by taking for example the case where the flowing direction of water to be treated is identical to the flowing direction of permeate, the present invention is not necessarily limited thereto. For example, the water inlet 1 and the concentrate outlet 2 may be reversely located, through which water to be treated flows. That is, water to be treated may flow into the concentrate outlet 2 of the above examples and concentrate flows out of the water inlet 1 of the above examples. Also, flow-regulating plates may be respectively provided both in the water inlet 1 and the concentrate outlet 2, in which the direction of water flow is changed every certain period of time.

In the above examples, specific reference was not made to the material of the pressure vessel 3, 103. In the present invention, for example, metal such as stainless steel and carbon steel, or resin or the like designed to be capable of resisting pressure may be used. In case of using a metallic material, the pressure vessel 3, 103 may be formed by applying such as resin lining to the inner side thereof.

The present invention thus arranged produces the following effects.
(1) According to the invention recited in claims 1, 4, 9, 15, 16 and 17, it is possible to provide a membrane separation apparatus and a membrane separation process that are unlikely to cause membrane fouling and plugging, capable of achieving membrane separation even when water to be treated flows at a relatively low rate, have an excellent membrane packing density, as well as preventing foreign components from being deposited in the apparatus. Specifically, according to the invention recited in claims 9 and 17, since the water collecting members made from a plate like member are used in place of the inner casing, it is possible to provide the membrane separation apparatus of a compact size and the membrane separation process using the same, which also produce the above effects.
(2) According to the invention recited in claims 2 and 5, it is possible to shorten the overall length of the pressure vessel and thus make the vessel compact, while limiting the deposition of suspended solid in the pressure vessel.
(3) According to the invention recited in claims 3 and 12, it is possible to reduce the pressure loss of permeate within the membrane separation elements. Also, according to the invention recited in claim 13, further reduction of the pressure loss can be achieved.
(4) According to the invention recited in claim 6, it is possible to treat water in larger volume with respect to an installation area than ever before.
(5) According to the invention recited in claim 7, it is possible to limit deposition of suspended solid or the like on membrane surfaces (the surfaces of the permeable membranes) of the membrane separation elements, since the adjacent membrane separation element groups are disposed at a certain angle relative to each other, thus making it easy to cause turbulent flow. Particularly, according to the invention recited in claim 8, the membrane separation element groups are disposed substantially orthogonal to each other, which produces a maximum effect in causing turbulent flow of water. Hence, it is possible to more effectively limit deposition of suspended solid or the like on the membrane surfaces of the membrane separation elements. Further, according to the invention recited in claim 14, it is possible to limit deposition of suspended solid or the like on the membrane surfaces of the membrane separation elements in the manner as above, since turbulent flow of water is easy to occur between the flow-regulating plate and the membrane separation element group.
(6) According to the invention recited in claim 18, it is possible to provide the membrane separation process which is unlikely to cause membrane fouling and plugging of the membrane separation elements.
(7) According to the invention recited in claim 19, it is possible to provide an effective membrane washing process.

## Claims

1. A membrane separation apparatus comprising a pressure vessel having a water inlet at a first end and a concentrate outlet at a second end; inner casings disposed along a longitudinal axis of the pressure vessel; a flow-regulating plate disposed on the side of the water inlet of the pressure vessel; stacks of membrane separation elements respectively disposed in the inner casings; spacers disposed between the adjacent membrane separation elements, said spacers also serving as seal members; each stack of membrane separation elements and the spacers therein together defining a through-hole extending from a first side to a second side, of the stack of membrane separation elements; the inner casings having permeate discharge passages along the longitudinal axis thereof; and said permeate discharge passages being communicated with the through-hole of each stack of membrane separation elements; wherein water that has been fed into the pressure vessel via the flow-regulating plate permeates through the membrane separation elements and is discharged to the outside via the through-holes and the permeate discharge passages.

2. The membrane separation apparatus according to claim 1, wherein each of the inner casings has a length substantially equal along the longitudinal axis of the pressure vessel to the length of the stack of membrane separation elements therein so that substantially no space is formed between the stacks of membrane separation elements of the adjacent inner casings.

3. The membrane separation apparatus according to any one of claims 1 and 2, wherein each of the membrane separation elements has a five-layer structure of a permeable membrane, a space retaining member, a support plate, a space retaining member and a permeable membrane laminated together in this order, and the support plate has at least one cut that is located around and extends to the through-hole.

4. A membrane separation apparatus comprising:
a pressure vessel having a water inlet and a concentrate outlet, an inner casing disposed in the pressure vessel, and membrane separation element group disposed in the inner casing;
said membrane separation element group being made up of a stack of membrane separation elements and spacers disposed between the membrane separation elements, said membrane separation elements defining a through-hole that extends through the membrane separation elements and the spacers; and
said through-hole defined in the membrane separation element group being communicated with permeate discharge passages defined in the inner casing;
wherein water that has been fed into the pressure vessel permeates through the membrane separation elements and is discharged to the outside via the through-hole and the permeate discharge passages.

5. The membrane separation apparatus according to claim 4, wherein a plurality of inner casings are disposed in the pressure vessel and membrane separation element groups disposed in the adjacent inner casings are located close to each other.

6. The membrane separation apparatus according to any one of claims 4 and 5, wherein a plurality of the membrane separation element groups are disposed in the inner casing.

7. The membrane separation apparatus according to any one of claims 4 to 6, wherein the adjacent membrane separation element groups are disposed at a certain angle relative to each other.

8. The membrane separation apparatus according to any one of claims 4 to 6, wherein the adjacent membrane separation element groups are disposed substantially orthogonal to each other.

9. A membrane separation apparatus comprising:
a pressure vessel having a water inlet and a concentrate outlet, water collecting members disposed in the pressure vessel, and a membrane separation element group held between the water collecting members;
said membrane separation element group being made up of a stack of membrane separation elements and spacers disposed between the membrane separation elements, said membrane separation elements defining a through-hole that extends through the membrane separation elements and the spacers; and
said through-hole defined in the membrane separation element group being communicated with permeate discharge passages respectively defined in the water collecting members;
wherein water that has been fed into the pressure vessel permeates through the membrane separation elements and is discharged to the outside via the through-hole and the permeate discharge passages.

10. The membrane separation apparatus according to claim 9, wherein said membrane separation element group is held between a pair of the water collecting members that are in turn fastened by a fastening means.

11. The membrane separation apparatus according to any one of claims 9 and 10, wherein the water collecting members each are made of a plate-like member.

12. The membrane separation apparatus according to any one of claims 4 to 11, wherein each of the membrane separation elements has a five-layer structure of a permeable membrane, a space retaining member, a support plate, a space retaining member and a permeable membrane laminated together in this order, and the support plate has at least one cut that has a first end communicated with the through-hole.

13. The membrane separation apparatus according to claim 12, wherein said at least one cut has a second end located outside of a project area of the spacers in the support plate.

14. The membrane separation apparatus according to any one of claims 4 to 13, further comprising a flow-regulating plate located on the side of the water inlet of the pressure vessel so as to be substantially orthogonal to the adjacent membrane separation element group.

15. A membrane separation process, wherein a pressure vessel has a water inlet and a concentrate outlet, an inner casing is disposed in the pressure vessel, and a membrane separation element group is disposed in the inner casing;
said membrane separation element group is made up of a stack of membrane separation elements and spacers disposed between the membrane separation elements, said membrane separation element group defining a through-hole that extends through the membrane separation elements and the spacers; and
said through-hole defined in the membrane separation element group is communicated with permeate discharge passages defined in the inner casing;
said process comprising feeding water into the pressure vessel, making said water permeate through the membrane separation elements and discharging permeate to the outside via the through-hole and the permeate discharge passages.

16. A membrane separation process which is carried out by a membrane separation apparatus, said apparatus comprising a pressure vessel having a water inlet at a first end and a concentrate outlet at a second end; inner casings disposed within the pressure vessel along a longitudinal axis thereof; a flow-regulating plate disposed on the side of the water inlet of the pressure vessel; stacks of membrane separation elements respectively disposed in the inner casings; spacers disposed between the adjacent membrane separation elements, said spacers also serving as seal members; each stack of membrane separation elements and the spacers therein together having a through-hole extending from a first side to a second side, of the stack of membrane separation elements; each of the inner casings having permeate discharge passages along the longitudinal axis thereof, and said permeate discharge passages being communicated with the through-hole of each stack of the membrane separation elements; said process comprising feeding water into the pressure vessel via the flow-regulating plate, making said water permeate through the membrane separation elements and discharging permeate to the outside via the through-holes and the permeate discharge passages.

17. A membrane separation process, wherein a pressure vessel has a water inlet and a concentrate outlet, water collecting members are disposed in the pressure vessel, and a membrane separation element group is held between the water collecting members;
said membrane separation element group is made up of a stack of membrane separation elements and spacers disposed between the membrane separation elements, said membrane separation element group defining a through-hole that extends through the membrane separation elements and the spacers; and
said through-hole defined in the membrane separation element group is communicated with permeate discharge passages respectively defined in the water collecting members;
said process comprising feeding water into the pressure vessel, making said water permeate through the membrane separation elements and discharging permeate to the outside via the through-hole and the permeate discharge passages.

18. The membrane separation process according to any one of claims 15 to 17, wherein gas is entrained in water to have a two-phase flow of water and gas and said flow is sent to the pressure vessel.

19. The membrane separation process according to any one of claims 15 to 18, wherein any one of pressurized back wash water and back wash water with gas entrained therein is flown through a permeate discharge side of the pressure vessel into the pressure vessel, thereby washing the membrane separation elements.
